# EUROPÄISCHE PATENTANMELDUNG

(11) **EP 2 284 028 A1**
(43) Veröffentlichungstag der Anmeldung: **16.02.2011**
(21) Anmeldenummer: 09007499.8
(22) Anmeldetag: 06.06.2009
(51) Int. Cl.: B60J 1/18

(54) **Verdeckvorrichtung für ein Fahrzeug und Verfahren zum Herstellen einer Verdeckvorrichtung**

(30) Priorität: 12.07.2008 DE 102008032931; 26.08.2008 DE 102008039716
(71) Anmelder: Wilhelm Karmann GmbH, 49084 Osnabrück (DE)
(72) Erfinder: Schuster, Volkmar, Dr., 49090 Osnabrück (DE); Bleiner, Uwe, 49597 Rieste (DE)
(74) Vertreter: Kronthaler, Schmidt & Coll.

(57) **Zusammenfassung**

Es wird eine Verdeckvorrichtung (2) für ein Fahrzeug mit einem flexiblen Verdeckbezug (6) und einer Scheibe (4) beschrieben. Der Verdeckbezug (6) und die Scheibe (4) sind zumindest in einem Randbereich (5) wenigstens abschnittsweise über ein Klebstoffsystem (7) miteinander verbunden. Das Klebstoffsystem (7) ist ein durch einen Energieeintrag zu einem Duromer aushärtendes Ein-Komponenten-Klebstoffsystem auf Epoxidharzbasis. Zusätzlich wird ein Verfahren zum Herstellen einer solchen Verdeckvorrichtung (2) beschrieben, bei dem das Klebstoffsystem (7) auf zumindest den Verdeckbezug (6) oder der Scheibe (4) aufgetragen, der Verdeckbezug (6) und die Scheibe (4) miteinander in Anlage gebracht und wenigstens das Klebstoffsystem (7) zur Herstellung der Verklebung mit Energie beaufschlagt wird und durch den Energieeintrag zu einem Duromer vernetzt.

## Beschreibung

Die Erfindung betrifft eine Verdeckvorrichtung für ein Fahrzeug mit einem flexiblen Verdeckbezug und ein Verfahren zum Herstellen einer Verdeckvorrichtung gemäß der im Oberbegriff des Patentanspruches 1 bzw. 7 näher definierten Art.

Aus der DE 10 2005 043 517 A1 ist ein Textilverdeck eines Kraftfahrzeuges bekannt, welches mit einer Glasscheibe bzw. einer Heckscheibe verklebt ist. Das Textilverdeck weist angrenzend an eine sogenannte Umbugfaltlinie eine Umbuglasche auf, wobei die Umbuglasche um die Umbugfaltlinie umgeklappt zunächst mit einer Unterseite des Textilverdecks verklebt ist. Hierzu ist zwischen der Umbuglasche und der Unterseite des Textilverdecks ein erster Klebstoff vorgesehen, mittels dem die Umbuglasche an der Unterseite des Textilverdecks verklebt ist.

Bei der Herstellung der Verklebung der Umbuglasche mit dem Textilverdeck wird der erste Klebstoff kontrolliert über eine freie Stirnseite der Umbuglasche aufgetragen, so dass der erste Klebstoff die Stirnseite vollständig überdeckt. Nach einer Aushärtung des ersten Klebstoffes lässt sich die Umbuglasche auf eine Oberfläche der Heckscheibe aufkleben. Hierzu ist auf die Oberfläche ein zweiter Klebstoff aufgetragen, der ein Verkleben der umgeklappten Umbuglasche mit der Heckscheibe sicherstellt. In einem Bereich angrenzend an die Stirnseite der Umbuglasche ist der erste Klebstoff direkt in Kontakt mit dem zweiten Klebstoff. Durch den direkten Kontakt Klebstoff-Klebstoff soll eine ausgezeichnete Befestigung der Abdeckung auf der Heckscheibe gewährleistet werden, so dass die Gefahr einer Delamination der Umbuglasche bei auftretenden Zugkräften insbesondere in einem Winkel zur Oberfläche der Heckscheibe herabgesetzt ist.

Nachteilig dabei ist jedoch, dass die vorgeschlagene Klebeverbindung zwischen dem Textilverdeck und der Heckscheibe durch unerwünscht hohe Fertigungszeiten gekennzeichnet ist, da der im Bereich der Umbuglasche vorgesehene erste Klebstoff vor der eigentlichen Verklebung des Textilverdecks mit der Heckscheibe auszuhärten ist. Darüber hinaus ist das Textilverdeck gemeinsam mit dem ersten Klebstoff in Deckung mit dem zweiten auf der Heckscheibe aufgetragenen Klebstoff in Deckung zu bringen, um die gewünschte ausgezeichnete Befestigung des Textilverdecks auf der Heckscheibe gewährleisten zu können, weshalb die Anforderungen an die Güte des Herstellprozesses hoch sind.

Ein Kraftfahrzeug-Faltverdeck mit einem flexiblen Bezugstoff und einer in den Bezugstoff integrierten Scheibe, die in kraftübertragender Weise mit dem Bezugstoff verbunden ist, ist aus der DE 202 07 069 U1 bekannt. Der Bezugstoff ist in seinem der Scheibe zugewandten Endabschnitt umgeschlagen und auf die Scheibenoberfläche aufgeklebt. Die Verbindung zwischen der Scheibe und dem Bezugstoff ist als kraftübertragende Klebeverbindung realisiert, wobei der Bezugstoff mit seinem umgeschlagenen Endabschnitt unmittelbar mit der Scheibenoberfläche verklebt ist. In eine durch den umgeschlagenen Bezugstoff gebildete Bezugstofftasche ist eine mittelbar auf der Scheibenoberfläche aufliegende Leiste eingesteckt, die sich über die Länge der Klebverbindung zwischen Scheibe und Bezugstoff parallel zur Scheibenkante erstreckt.

Über die Leiste werden die zu übertragenden Kräfte gleichmäßig verteilt, so dass lokale Kraftspitzen vermieden bzw. geglättet an den Bezugstoff weitergegeben werden, wodurch die Gefahr von spannungsbedingten Rissen im Bezugstoff stark reduziert wird. Über die Glättung des Bezugstoffes im Bereich seiner Klebanbindung an die Scheibe und die gradlinige Ausrichtung als Folge der in die Bezugstofftasche eingeschobenen Leiste wird auch das optische Erscheinungsbild des Bezugstoffes im Übergang zur Scheibe verbessert.

Die zur Verbesserung der Standfestigkeit des Faltverdecks vorgesehene Leiste erhöht einen Montageaufwand und verlängert die Prozesszeiten des Herstellverfahrens des Faltverdecks, da die Leiste erst nach dem vollständigen Aushärten der Klebschicht in die Bezugstofftasche einsteckbar ist. Darüber hinaus werden durch die zusätzliche Leiste hohe Qualitätsanforderungen an den Herstellprozess gestellt, da die Leiste in eine zu kleine Bezugstofftasche nicht einschiebbar ist.

Der vorliegenden Erfindung liegt daher die Aufgabe zugrunde, eine Verdeckvorrichtung und ein Verfahren zum Herstellen einer Verdeckvorrichtung zur Verfügung zu stellen, mittels welchen ein Fertigungsaufwand im Vergleich zu aus dem Stand der Technik bekannten Lösungen reduzierbar ist.

Erfindungsgemäß wird diese Aufgabe mit einer Verdeckvorrichtung und einem Verfahren mit den Merkmalen des Patentanspruches 1 bzw. 7 gelöst.

Die erfindungsgemäße Verdeckvorrichtung für ein Fahrzeug mit einem flexiblen Verdeckbezug und einer Scheibe, wobei der Verdeckbezug und die Scheibe zumindest in einem Randbereich wenigstens abschnittsweise über ein Klebstoffsystem miteinander verbunden sind, ist mit einem Klebstoffsystem, das ein durch einen Energieeintrag zu einem Duromer aushärtendes Ein-Komponenten-Klebstoffsystem auf Epoxidharzbasis ist, ausgeführt.

Die Verdeckvorrichtung nach der Erfindung ist im Verbindungsbereich zwischen dem Verdeckbezug und der Scheibe mit einer Klebeverbindung ausgebildet, die gegen Umwelteinflüsse unempfindlich ist und einfach herstellbar ist, da im Vergleich zu bekannten Verdeckvorrichtungen eine Nachvernetzung des Klebstoffsystems durch Luftfeuchtigkeit nicht erforderlich ist.

Darüber hinaus sind zusätzliche aus dem Stand der Technik bekannte und die Güte der Verbindung verbessernde Fertigungsschritte, wie beispielsweise das Einschieben von Leisten in eine Bezugstofftasche oder ein exaktes Ausrichtung eines ersten Klebstoffbereiches in Bezug auf einen zweiten Klebstoffbereich, während der Fertigung der erfindungsgemäßen Verdeckeinrichtung nicht erforderlich, da die Verbindung über einen quervernetzten Duromer durch eine hohe Stabilität und Alterungsbeständigkeit gekennzeichnet ist. Damit ist die Verdeckvorrichtung nach der Erfindung in kostengünstiger Art und Weise mittels einer Fließfertigung herstellbar.

Bei einer vorteilhaften Ausführungsform der erfindungsgemäßen Verdeckvorrichtung weist das Klebstoffsystem mit der Scheibe reagierende Komponenten auf, so dass zur Herstellung einer festen Verklebung ein Auftragen eines sogenannten Primers auf die Scheibe nicht erforderlich ist und die Herstellung der Verdeckvorrichtung im Vergleich zu bekannten Verdeckvorrichtungen weiter vereinfacht ist.

Bei einer vorteilhaften Weiterbildung der Verdeckvorrichtung nach der Erfindung ist eine Vernetzungstemperatur des Klebstoffsystems kleiner als 100°C, vorzugsweise 70°C bis 85°C, womit eine thermische Belastung während der eigentlichen Verklebung des Verdeckbezuges und der Scheibe für die beiden miteinander zu verbindenden Bauteile der Verdeckvorrichtung im Vergleich zu aus der Praxis bekannten Ein-Komponenten-Klebstoffsystemen auf Epoxidharzbasis, welche üblicherweise bei Prozesstemperaturen von 130° bis 150°C vernetzen, reduziert ist.

Die thermische Belastung des mit der Scheibe über das Klebstoffsystem zu verbindenden flexiblen Verdeckbezuges und auch der Scheibe ist bei einer weiteren vorteilhaften Ausführungsform der Verdeckvorrichtung nach der Erfindung dadurch reduziert, dass das Klebstoffsystem durch einen Energieeintrag in das Klebstoffsystem in Bewegung versetzbare Partikel aufweist, welche das Klebstoffsystem aufgrund ihrer Bewegung zumindest teilweise auf das Niveau seiner Vernetzungstemperatur führen. Bei dieser Ausführung des Klebstoffsystems der Verdeckvorrichtung wird durch den Energieeintrag lediglich das Klebstoffsystem erwärmt und weder der Verdeckbezug noch die Scheibe unnötigerweise mit thermischer Energie beaufschlagt, wodurch eine Beeinträchtigung des Verdeckbezuges und der Scheibe im Fügebereich der beiden Bauteile sicher vermieden wird.

Bei weiteren vorteilhaften Ausführungsformen der erfindungsgemäßen Verdeckvorrichtung ist die Scheibe als Festglasscheibe oder als Kunststoffscheibe ausgebildet und/oder der Verdeckbezug mit oder ohne Umbug an der Scheibe festgelegt.

Bei dem erfindungsgemäßen Verfahren zum Herstellen einer Verdeckvorrichtung nach der Erfindung wird das Klebstoffsystem auf zumindest den Verdeckbezug oder die Scheibe aufgetragen, der Verdeckbezug und die Scheibe miteinander in Anlage gebracht und wenigstens des Klebstoffsystem zur Herstellung der Verklebung mit Energie beaufschlagt und durch den Energieeintrag zu einem Duromer vernetzt.

Aufgrund der erfindungsgemäßen Vorgehensweise ist die Verdeckvorrichtung nach der Erfindung auf einfache und kostengünstige Art und Weise in einer Fließfertigung mit geringem Herstellaufwand produzierbar, wobei an den Fertigungsprozess bezüglich Herstelltoleranzen im Vergleich zu aus dem Stand der Technik bekannten Herstellverfahren geringere Anforderung zu stellen sind, da die Scheibe und der Verdeckbezug lediglich zur Herstellung des für die Verklebung vorgesehenen Überlappungsbereiches zwischen dem Verdeckbezug und der Scheibe zu positionieren sind.

Bei vorteilhaften Varianten des erfindungsgemäßen Verfahrens wird der zur Vernetzung des Klebstoffsystems erforderliche Energieeintrag in das Klebstoffsystem mittels einer Wärmequelle und/oder mittels eines HF-Feldes (Hoch-Frequenz-Feld) und/oder mittels einer Infrarotstrahleinrichtung erzeugt. Der Energieeintrag mittels eines HF-Feldes verursacht bei einem Klebstoffsystem mit in Bewegung versetzbaren polaren Partikeln die geringste thermische Belastung im Bereich des Verdeckbezuges und der Scheibe, da im Wesentlichen dann nur das Klebstoffsystem durch die in Schwingung versetzten Partikel und die daraus resultierende Reibungswärme erwärmt wird, während der unpolare Verdeckbezug und die ebenfalls unpolare Scheibe durch das angelegte HF-Feld nicht erwärmt werden und lediglich ein Wärmefluss ausgehend vom Klebstoffsystem in die Scheibe und den Verdeckbezug auftritt.

Weitere Vorteile und vorteilhafte Ausführungen einer Verdeckvorrichtung nach der Erfindung und eines Verfahrens zum Herstellen einer Verdeckvorrichtung ergeben sich aus den Patentansprüchen, der Zeichnung und der Beschreibung.

Nachfolgend sind sowohl ein vorteilhaftes Ausführungsbeispiel einer erfindungsgemäßen Verdeckvorrichtung als auch verschiedene Varianten des erfindungsgemäßen Verfahrens anhand der Zeichnung prinzipmäßig beschrieben.

Es zeigt:
- Fig. 1: eine dreidimensionale Ansicht eines Cabriolet-Fahrzeugs mit einer Verdeckvorrichtung; und
- Fig. 2: eine stark vereinfachte Darstellung eines Ausschnitts einer Heckscheibe und ihrer Anbindung an einen Verdeckbezug der Verdeckvorrichtung gemäß Fig. 1.

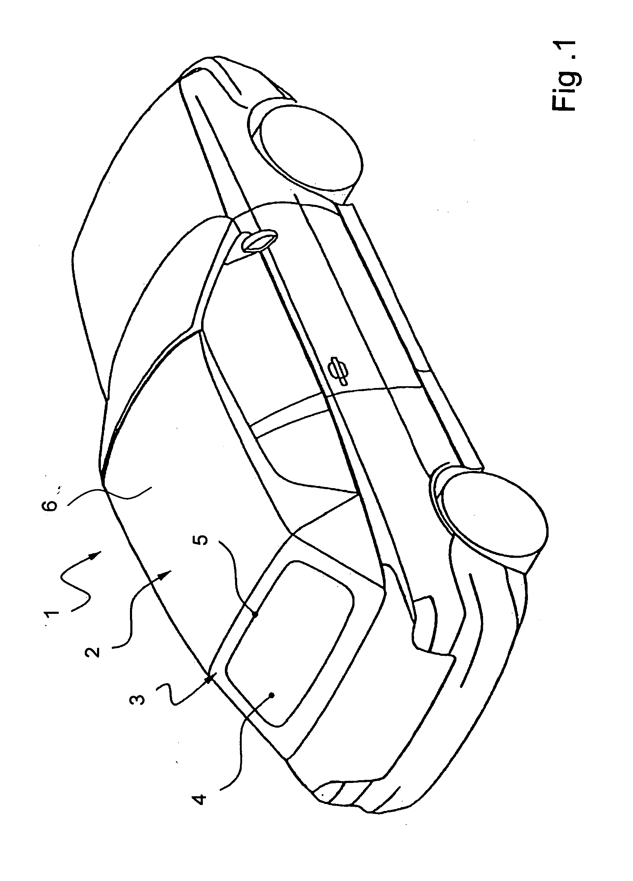

Fig. 1 zeigt ein Cabriolet-Fahrzeug 1 mit einer als sogenanntes Soft-Top ausgebildeten Verdeckvorrichtung 2, welche in einem heckseitigen Bereich 3 eine wenigstens annähernd rechteckig ausgebildete Scheibe 4 aufweist, die vorliegend die Fahrzeugheckscheibe darstellt und aus Festglas hergestellt ist. Die Scheibe 4 ist in einem Randbereich 5 an einem Verdeckbezug 6 der Verdeckvorrichtung 2 festgelegt.

Der Verdeckbezug 6 ist vorliegend dreilagig ausgebildet, wobei eine einem Fahrzeuginnenraum zugewandte Schicht des Verdeckbezugs 6 mit **P**oly**a**mid (PA)-Fasern ausgebildet ist. Eine der Polyamid-Faserschicht gegenüberliegende, eine Außenhaut des Verdecks 2 bildende Schicht des Verdeckbezugs 6, ist mit einer **P**oly**a**cryl**n**itril (PAN)-Faser ausgebildet. Zwischen der PAN-Schicht und der PET-Schicht ist eine Hohlräume aufweisende Butylschicht ausgebildet, welche auch als Akustikverdeckstoff bezeichnet wird.

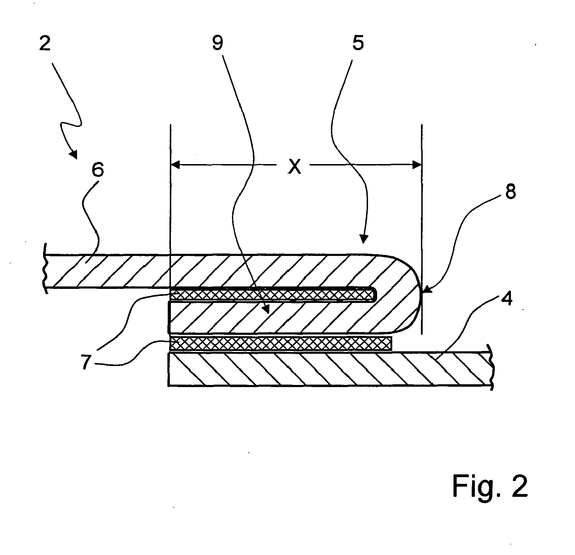

In Fig. 2 ist eine schematisierte vergrößerte Teilquerschnittansicht des Verbindungsbereiches zwischen dem Verdeckbezug 6 und der Heckscheibe 4 dargestellt, die über ein Klebstoffsystem 7 miteinander verbunden sind. Das Klebstoffsystem 7 ist ein durch einen Energieeintrag zu einem Duromer aushärtendes bzw. strahlenhärtendes Ein-Komponenten-Klebstoffsystem auf Epoxidharz, welches durch eine Vernetzungstemperatur kleiner als 100°C, vorzugsweise 70°C bis 85°C, gekennzeichnet ist. Darüber hinaus enthält das Klebstoffsystem 7 mit der Scheibe 4 reagierende Komponenten, so dass eine Verklebung zwischen dem Verdeckbezug 6 und der Heckscheibe 4 ohne zusätzliches Primern der Heckscheibe 4 durchführbar ist. Die Scheibe 4 ist vor dem Klebeprozess lediglich von Schmutz und Fett zu befreien und anschließend mit dem Verdeckbezug 6 über das Klebstoffsystem 7 verbindbar.

Um eine thermische Belastung der Scheibe 4 und des Verdeckbezugs 6 so gering wie möglich zu halten, ist das Klebstoffsystem 7 mit durch einen von einem HF-Feld erzeugten Energieeintrag in das Klebstoffsystem 7 in Bewegung versetzbaren polaren Partikeln ausgebildet, welche das Klebstoffsystem 7 aufgrund ihrer Bewegung und der daraus im Klebstoffsystem 7 entstehenden Reibungswärme auf das Niveau seiner Vernetzungstemperatur führen. Sowohl die unpolare Scheibe 4 als auch der unpolare Verdeckbezug 6 werden im HF-Feld selbst nicht angeregt und auch nicht vom HF-Feld erwärmt. Der Verdeckbezug 6 und die Heckscheibe 4 werden lediglich durch einen von dem dazwischen angeordneten Klebstoffsystem 7 ausgehenden Wärmefluss auf Temperaturen unterhalb der Vernetzungstemperatur des Klebstoffsystems 7 erwärmt.

Zur Herstellung der Klebeverbindung zwischen dem Verdeckbezug 6 und der Scheibe 4 wird das Klebstoffsystem 7 in Abhängigkeit des jeweils vorliegenden Anwendungsfalles entweder auf den Verdeckbezug 6 oder die Scheibe 4 aufgetragen. Anschließend werden der Verdeckbezug 6 und die Scheibe 4 in einem Überlappungsbereich X miteinander in Anlage gebracht. Das Klebstoffsystem 7 wird in flüssigem Zustand in einer Nassschicht von 200 bis 600 µm als Flachraupe und aus Monomeren bestehend aufgetragen, wobei der Verdeckbezug 6 im Überlappungsbereich X auf die Scheibe 4 gedrückt wird. In flüssigem Zustand ist das Klebstoffsystem 7 leicht dosierbar, wodurch eine Auftragung des Klebstoffsystems 7 sehr einfach zu realisieren ist.

Zur Erzielung einer definierten Verbindung zwischen dem Verdeckbezug 6 und Heckscheibe 4 werden diese in einem Fügeprozess in einem nicht näher dargestellten formgebenden Werkzeug derart eingespannt, dass ein definierter Druck in dem Überlappungsbereich X ausgeübt wird und der Fügeprozess so reproduzierbar ist.

In einem an den Fügeprozess anschließenden Prozessschritt wird an den Verdeckbezug 6 und die Heckscheibe 4 zumindest im Überlappungsbereich X für 30 bis 40 Sekunden ein HF-Feld angelegt, wodurch polare Nanopartikel, wie Ferrit-Partikel, des Klebstoffsystems zu Schwingungen angeregt werden, die das Klebstoffsystem 7 durch Reibungswärme auf seine Vernetzungstemperatur von vorzugsweise 75°C erwärmen. Das Klebstoffsystem 7 härtet dabei innerhalb kurzer Prozesszeiten zu einem quervernetzten Duromer aus, womit eine sehr alterungsbeständige Verbindung zwischen dem Verdeckbezug 6 und der Heckscheibe 4 auf kostengünstige Art und Weise geschaffen wird.

Der Verdeckbezug 6 weist im Überlappungsbereich X zusätzlich zur Schaffung einer geraden Verdeckbezugkante 8 einen Umbug 9 auf, wobei der Umbugbereich 9 im Überlappungsbereich X über das Klebstoffsystem 7 mit dem restlichen Verdeckbezug 6 verklebt ist. Die Aushärtung des in diesem Bereich angeordneten Teils des Klebstoffsystems 7 erfolgt ebenfalls über das HF-Feld in der vorbeschriebenen Art und Weise.

Sowohl die zwischen dem Umbugbereich 9 und dem Verdeckbezug 6 als auch zwischen dem Verdeckbezug 6 und der Heckscheibe 4 hergestellte Klebeverbindung ist gegen Umwelteinflüsse unempfindlich und weist somit eine hohe Alterungsbeständigkeit auf. Darüber hinaus ist bei dem verwendeten Klebstoffsystem 7 eine Nachvernetzung des Klebstoffes durch Luftfeuchtigkeit nicht erforderlich, weshalb die gewünschte Verbindung zwischen der Heckscheibe 4 und dem Verdeckbezug 6 mit kurzen Prozesszeiten mittels einer Fließfertigung auf einfache und kostengünstige Art und Weise herstellbar ist.

Zusätzlich oder alternativ zu der vorbeschriebenen Erzeugung des Energieeintrages durch ein HF-Feld besteht auch die Möglichkeit, das flüssige Klebstoffsystem 7 nach dem Fügeprozess des Verdeckbezuges 6 und der Heckscheibe 4 mittels einer beliebigen Wärmequelle, wie einen Ofen, bei einer Prozesstemperatur vorzugsweise zwischen 80 bis 100°C während einer Wärmebehandlungsdauer von 10 bis 15 Minuten auszuhärten bzw. das flüssige und aus Monomeren bestehende Klebstoffsystem 7 in einen quervernetzten ausgehärteten Duromer überzuführen.

Wiederum zusätzlich oder alternativ hierzu besteht auch die Möglichkeit, das Klebstoffsystem 7 nach dem Fügeprozess des Verdeckbezuges 6 und der Heckscheibe 4 durch einen von einer Infrarotstrahleinrichtung erzeugten Energieeintrag zu vernetzen.

In Abhängigkeit des jeweils vorliegenden Anwendungsfalles besteht auch die Möglichkeit, die Quervernetzung des Klebstoffsystems der Verdeckvorrichtung nach der Erfindung mittels einer beliebigen Wärmequelle bei gleichzeitig angelegtem HF-Feld zu realisieren, wobei jeweils die effektivste und kostengünstigste Energiequelle zur Erzeugung des Energieeintrages ausgewählt wird.

Mit dem beschriebenen erfindungsgemäßen Verfahren ist auch ein ohne Umbug ausgeführter Verdeckbezug an einer Scheibe festlegbar, wobei die Scheibe sowohl bei einem Verdeckbezug mit Umbug oder ohne Umbug mit einer Stufe ausgebildet sein kann, so dass der Verdeckbezug fluchtend mit der Scheibe an dieser festgelegt ist.

In einem weiteren Prozessschritt des Verfahrens nach der Erfindung kann es auch vorgesehen sein, dass die freie Verdeckbezugkante 8 des Verdeckbezugs 6 versiegelt oder umspritzt wird.

## Patentansprüche

1. Verdeckvorrichtung (2) für ein Fahrzeug (1) mit einem flexiblen Verdeckbezug (6) und einer Scheibe (4), wobei der Verdeckbezug (6) und die Scheibe (4) zumindest in einem Randbereich (5) wenigstens abschnittsweise über ein Klebstoffsystem (7) miteinander verbunden sind,
**dadurch gekennzeichnet,**
**dass** das Klebstoffsystem (7) ein durch einen Energieeintrag zu einem Duromer aushärtendes Ein-Komponenten-Klebstoffsystem auf Epoxidharzbasis ist.

2. Verdeckvorrichtung nach Anspruch 1,
**dadurch gekennzeichnet,**
**dass** das Klebstoffsystem (7) mit der Scheibe (4) reagierende Komponenten aufweist.

3. Verdeckvorrichtung nach Anspruch 2,
**dadurch gekennzeichnet,**
**dass** eine Vernetzungstemperatur des Klebstoffsystems (7) kleiner als 100°C, vorzugsweise zwischen 70°C bis 85°C, ist.

4. Verdeckvorrichtung nach Anspruch 3,
**dadurch gekennzeichnet,**
**dass** das Klebstoffsystem (7) durch einen Energieeintrag in das Klebstoffsystem (7) in Bewegung versetzbare polare Partikel aufweist, welche das Klebstoffsystem (7) aufgrund ihrer Bewegung zumindest teilweise auf das Niveau seiner Vernetzungstemperatur führen.

5. Verdeckvorrichtung nach einem der Ansprüche 1 bis 4,
**dadurch gekennzeichnet,**
**dass** die Scheibe (4) als Festglasscheibe oder als Kunststoffscheibe ausgebildet ist.

6. Verdeckvorrichtung nach einem der Ansprüche 1 bis 5,
**dadurch gekennzeichnet,**
**dass** der Verdeckbezug (6) mit oder ohne Umbug (9) an der Scheibe festgelegt ist.

7. Verfahren zum Herstellen einer Verdeckvorrichtung (2) gemäß einem der vorstehenden Ansprüche,
**dadurch gekennzeichnet,**
**dass** das Klebstoffsystem (7) auf zumindest den Verdeckbezug (6) oder die Scheibe aufgetragen, der Verdeckbezug (6) und die Scheibe (4) miteinander in Anlage gebracht und wenigstens das Klebstoffsystem (7) zur Herstellung der Verklebung mit Energie beaufschlagt wird und durch den Energieeintrag zu einem Duromer vernetzt.

8. Verfahren nach Anspruch 7,
**dadurch gekennzeichnet,**
**dass** der zur Vernetzung des Klebstoffsystems (7) erforderliche Energieeintrag mittels einer Wärmequelle erfolgt.

9. Verfahren nach Anspruch 7 oder 8,
**dadurch gekennzeichnet,**
**dass** der zur Vernetzung des Klebstoffsystems (7) erforderliche Energieeintrag mittels eines HF-Feldes durchgeführt wird.

10. Verfahren nach einem der Ansprüche 7 bis 9,
**dadurch gekennzeichnet,**
**dass** der zur Vernetzung des Klebstoffsystems (7) erforderliche Energieeintrag mittels einer Infrarotstrahleinrichtung erzeugt wird.
